# EUROPEAN PATENT APPLICATION

(11) **EP 1 892 269 A1**
(43) Date of publication of application: **27.02.2008**
(21) Application number: 06291237.3
(22) Date of filing: 27.07.2006
(51) Int. Cl.: C09B 57/00, C09B 67/22, G11B 7/246

(54) **Compositions comprising monosubstituted squaric acid metal complex dyes and merocycanine based dyes and their use in optical layers for optical data recording**

(71) Applicant: Clariant International Ltd., 4132 Muttenz 1 (CH)
(72) Inventor: Lücke, Lars, 65719 Hofheim am Taunus (DE); Graciet, Jean-Christophe, 68128 Village-Neuf (FR); Klein, Cédric, 67170 Brumath (FR); Steffanut, Pascal, 68128 Village-Neuf (FR); Winter, Martin Alexander, 79400 Kandem (DE)

(57) **Abstract**

The present invention relates to compositions monosubstituted squaric acid metal complex dyes and merocycanine based dyes and their use in optical layers for optical data recording, preferably for optical data recording using a laser with a wavelength up to 450 nm.

The invention further relates to a write once read many (WORM) type optical data recording medium capable of recording and reproducing information with radiation of blue laser, which employs compositions comprising monosubstituted squaric acid metal complex dyes and merocycanine based dyes in the optical layer.

## Description

The present invention relates to compositions monosubstituted squaric acid metal complex dyes and merocycanine based dyes and their use in optical layers for optical data recording, preferably for optical data recording using a laser with a wavelength up to 450 nm.

The invention further relates to a write once read many (WORM) type optical data recording medium capable of recording and reproducing information with radiation of blue laser, which employs compositions comprising monosubstituted squaric acid metal complex dyes and merocycanine based dyes in the optical layer.

Recently, organic dyes have attracted considerable attentions in the field of diode-laser optical data storage. WORM type optical data recording media like commercial recordable compact discs (CD-R) and recordable digital versatile discs (DVD-R) can contain in the recording layer dyes based on phthalocyanine, hemicyanine, cyanine and metallized azo structures. These dyes are suitable in their respective fields with the laser wavelength criteria. Other general requirements for dye media are strong absorption, high reflectance, high recording sensitivity, enhancement of photosensitivity, low thermal conductivity as well as light and thermal stabilities, durability for storage or non-toxicity. Important criteria are also good read-out stability, which means high number of cycles at a given intensity of laser-light, and sufficient solubilities of the dyes in the organic solvents generally applied in the spin coating process.
At the recorded region of such an organic dye type optical data recording medium, the optical properties have been changed not only by a change in the optical characteristics and a decrease in the layer thickness resulting from the thermal decomposition of the dye, but also by a deformation of the substrate.
This recording principle is the same for CD-R and DVD-R, the difference remaining the spot size and the wavelength of the laser light used. CD-R are writable at a wavelength of from 770 to 830 nm and DVD-R, by using more recent compact high-performance red diode lasers, at a wavelength from 600 to 700 nm achieving then a 6- to 8 fold improvement in data packing density in comparison with conventional CDs.

However, considering factors such as the recent spread of electronic networks (e.g. Internet) and the emergence of high definition television (HDTV) broadcasting, inexpensive and convenient recording media, capable of recording image information at even larger capacity, are required. While DVD-R's sufficiently serve as high-capacity recording media at present, demand for larger capacity and higher density has increased.

Blu-ray^{®} discs (Blu-ray^{®} disc is a standard developed by Hitachi Ltd., LG Electronics Inc., Matsushita Electric Industrial Co. Ltd., Pioneer Corporation, Royal Philips Electronics, Samsung Electronics Co. Ltd., Sharp Corporation, Sony Corporation, Thomson Multimedia) or HD-DVD discs (a standard developed by Toshiba and NEC) are going to be the next milestone in optical data recording technology. By these new specifications the data storage may be increased up to 27 Gigabytes per recording layer for a 12 cm diameter disc. By adopting a blue diode laser with a wavelength of 405 nm (GaN or SHG laser diodes), the pit size and track interval can be further reduced, again increasing the storage capacity by an order of magnitude.

The construction of such optical data recording media is known in the art. The optical recording medium comprises preferably a substrate with a guide groove for laser beam tracking, a recording layer, also called optical layer, containing an organic dye as the main component, a reflective layer and a protective layer. When recording/readout is carried out through the substrate, a transparent substrate is employed. As such a transparent substrate, one made of a resin such as polycarbonate, polymethacrylate or amorphous polyolefin, one made of glass or one having a resin layer made of radiation curable resin, i.e. photopolymerizable resin, formed on glass, may, for example, be employed. Advanced optical data recording media may comprise further layers, such as protective layers, adhesive layers or even additional optical recording layers.

For blue diode-laser optical data storage a variety of dye compounds has been proposed in the literature.

Monosubstituted squaric acid metal complex dyes are known from WO 2006053834. Merocycanine based dyes are known from DE-A-10348577.

Unfortunately the dye compounds described so far still show disadvantages which impede their satisfactory use as dyes for optical data storage.

There is a still a need for an optical data recording medium that is capable of recording data at high density with improved recording characteristics and with improved read-out stabilities.

Surprisingly the object was achieved by using compositions comprising monosubstituted squaric acid metal complex dyes and merocycanine based dyes.

In the following text "halogen" represents F, Cl, Br or I, preferably F, Cl or Br, more preferably F or Cl, even more preferably Cl, if not otherwise stated; "alkyl" represents linear and branched alkyl; "alkylthio" represents linear and branched alkylthio; and "alkoxy" represents linear and branched alkoxy; any alkyl, alkylthio and cycloalkyl group being unsubstituted or substituted by one or more halogen atoms (preferably halogenated alkyl are selected from the group consisting of CF₃, CF₂CF₃, CF₂CF₂CF₃ and chloromethyl, more preferably from CF₃, CF₂CF₃ and CF₂CF₂CF₃); if not otherwise stated.

Subject of the invention is a composition comprising
at least one compound of formula (I), 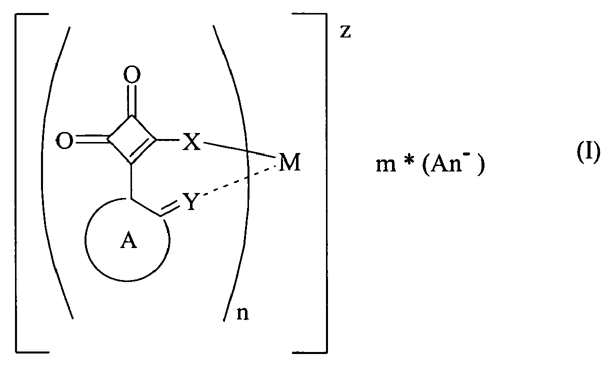 wherein
- X: is selected from the group consisting of O, S and NR¹;
- Y: is selected from the group consisting of O, S or imino-nitrogen N-R²;
- R¹ and R²: are independently from each other selected from the group consisting of hydrogen, C₁₋₁₂ alkyl, benzyl and C₆₋₁₂ aryl; the C₁₋₁₂ alkyl being unsubstituted or substituted by OH, C₆₋₁₂ aryl, halogen, -NR⁹R¹⁰;
- z: represents a charge equal to 0, +1 or +2 ;
- m: represents a number equal to z;
- An: represents an anion counter-part selected from inorganic anions such as iodine, fluorine, bromine, chlorine, perchlorate, hexafluoroantimonate, hexafluorophosphate, tetrafluoroborate, tetraphenylborate or from organic anions such as dicyanoamide (N(CN)₂) or trifluoromethanesulfonimide (N(SO₂CF₃)₂; or
- An⁻: can also be an anionic azo metal complex;
- M: represents a metal ion;
- A: is a five or six membered aromatic or heteroaromatic cycle, the aromatic or heteroaromatic cycle can be annealed with a five or six membered aromatic or heteroaromatic cycle, the heteroaromatic cycles contain 1, 2 or 3 heteroatoms selected from the group consisting of O, N and S, the aromatic or heteroaromatic cycles can be further substituted by 1 to 8 substituents independently from each other selected from the group consisting of
hydrogen, CN, halogen, NO₂, OH, SH,
C₁₋₈ alkyl, the C₁₋₈-alkyl being unsubstituted or substituted by C₁₋₈ alkyl, OH, C₆₋₁₂ aryl or -NR⁹R¹⁰;
CU₃;
C₆-C₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy, -NR⁹R¹⁰;
C₁₋₈ alkoxy, the C₁₋₈ alkoxy being unsubstituted or substituted by C₁₋₈ alkyl, OH, C₆₋₁₂ aryl or-NR¹¹R¹²; NR¹¹R¹²; and
C₁₋₈ alkylthio, the C₁₋₈ alkylthio being unsubstituted or substituted by C₁₋₈ alkyl, OH, C₆₋₁₂ aryl or-NR⁹R¹⁰; the
- R⁹ and R¹⁰: are independently from each other hydrogen, C₁₋₈ alkyl or C₆₋₁₂ aryl;
- R¹¹ and R¹²: are independently from each other hydrogen, C₁₋₈ alkyl or C₆₋₁₂ aryl; or
- R¹¹ and R¹²: form together with the N, to which they are connected, a five- or six-membered ring, which may contain further 1, 2 or 3 heteroatoms selected from the group consisting of O, N and S;
- U: represents chlorine, fluorine or bromine;
- n: represents a number 1, 2 or 3;
and at least one compound selected from the group consisting of compound of formula (II) and compound of formula (III), 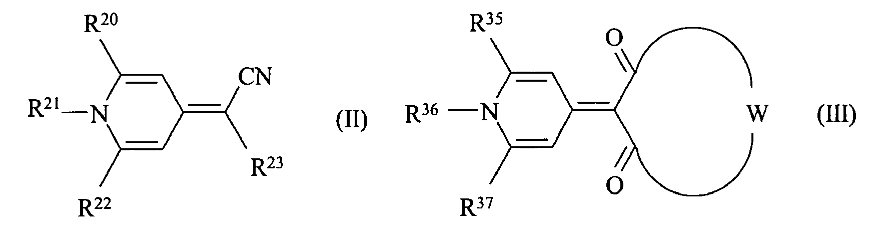 wherein
- R²¹ and R³⁶: independently from each other are selected from the group consisting of C₁₋₁₂-alkyl, C₁₋₁₂-hydroxyalkyl, C₃₋₁₂-cycloalkyl, C₆₋₁₂-aryl, C₆₋₁₂-aryl-C₁₋₁₂-alkyl and a five or six membered heterocycle containing 1, 2 or 3 heteroatoms selected from the group consisting of N, O or S, the heterocycle can be substituted by 1, 2 or 3 substituents selected from the group consisting of C₁₋₁₂-alkyl, C₃₋₁₂-cycloalkyl, C₆₋₁₂-aryl, C₆₋₁₂-aryl-C₁₋₁₂-alkyl and COOR³¹;
- R²⁰, R²² , R³⁵ and R³⁷: independently from each other are selected from the group consisting of hydrogen, C₁₋₄-alkyl, C₆₋₁₂-aryl and C₆₋₁₂-aryl-C₁₋₁₂-alkyl;
- R²³: represents COOR²⁴, CONHR²⁵, CONR²⁶R²⁷, CONHR²⁸ or CN;
- R²⁴ and R³¹: are independently from each other H, C₁₋₁₂-alkyl, C₃₋₁₂-cycloalkyl, C₆₋₁₂-aryl or C₆₋₁₂-aryl-C₁₋₁₂-alkyl;
- R²⁵: represents C₁₋₁₂-alkyl;
- R²⁶ and R²⁷: form together with the N, to which they are connected, a pyrrolidine-, piperidine- or morpholine-ring;
- R²⁸: represents C₆₋₁₂ aryl;
- W: represents a divalent residue selected from the group consisting of formula (a), (b), (c), (d), (e) and (f), the (*) denoting the bonds of W, which are connected to the two CO-groups in formula (III); 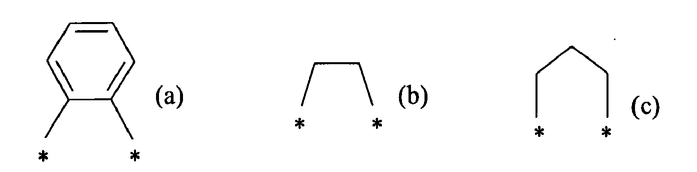 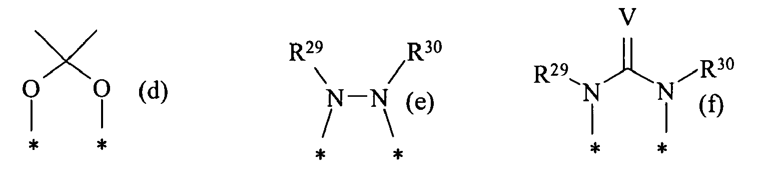
- R²⁹ and R³⁰: represent independently from each other H, C₁₋₁₂-alkyl, C₆₋₁₂-aryl or C₆₋₁₂-aryl-C₁₁₋₁₂-alkyl;
- V: represents O or S.

In a preferred aspect,
- X: represents O or S;
- z: represents a charge equal to 0 or +1;
- m: represents a number equal to z;
- An⁻: represents an anion counter-part selected from inorganic anions such as chlorine, perchlorate, hexafluoroantimonate, hexafluorophosphate, tetrafluoroborate, tetraphenylborate or from organic anions such as dicyanoamide (N(CN)₂) or trifluoromethanesulfonimide (N(SO₂CF₃)₂; or
- An⁻: can also be an anionic azo metal complex;
- M: represents a metal ion selected from the group consisting of Ca, Sr, Ba, Al, Ga, In, Sc, Y, Ti, Zr, V, Nb, Ta, Cr, Mo, W, Mn, Fe, Ru, Os, Co, Rh, Ir, Ni, Pd, Pt, Cu, Ag, Au, Zn, Cd, Hg, La, Ce, Pr, Nd, Pm, Sm, Eu, Gd, Tb, Dy, Ho, Er, Tm, Yb, Lu;
- n: represents a number 1, 2 or 3;
- A together with Y: is selected from the group consisting of residues of formulae (g), (h), (i), (j), (k), (1), (m), (n), (o), (p), (q), (r) and (s) and their tautomeric forms, the (*) denoting the bond of A to the squaric acid moiety in formula (I), 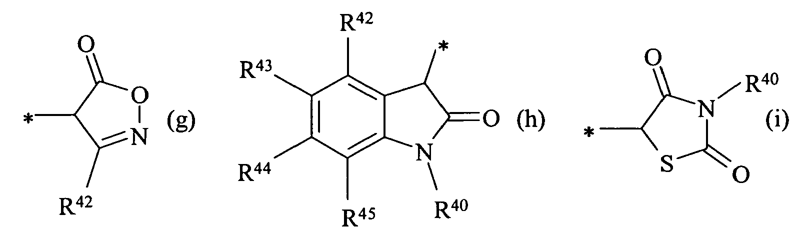 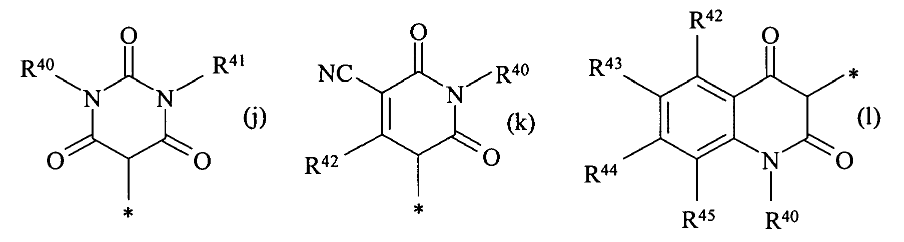 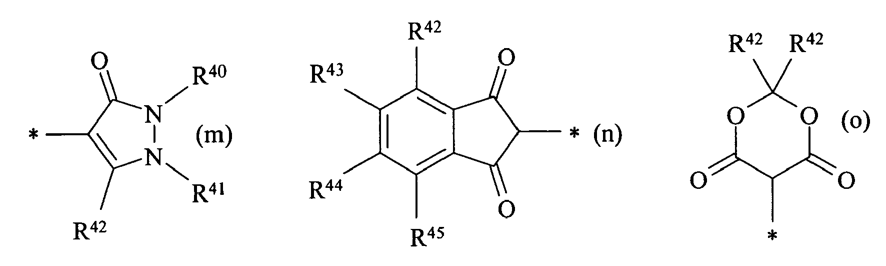 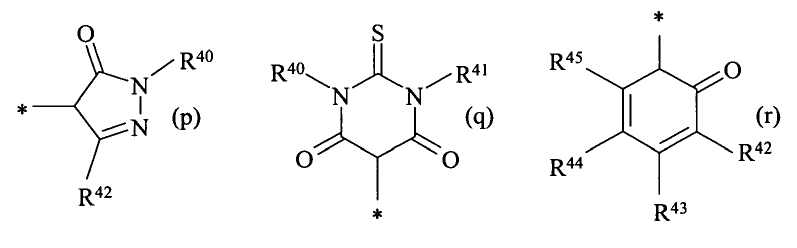 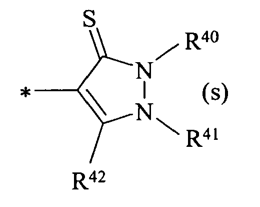 wherein
R⁴⁰and R⁴¹ independently from each other represent hydrogen,
C₁₋₈ alkyl, the C₁₋₈-alkyl being unsubstituted or substituted by C₁₋₈ alkyl, OH, C₆₋₁₂ aryl or -NR⁹R¹⁰;
CU₃
C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy, -NR⁹R¹⁰; or
C₆-C₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy, -NR⁹R¹⁰;
R⁴² to R⁴⁵ independently from each other represent
hydrogen, CN, halogen, NO₂, OH,
C₁₋₈ alkoxy, the C₁₋₈ alkoxy being unsubstituted or substituted by C₁₋₈ alkyl, OH, C₆₋₁₂ aryl or-NR¹¹R¹²;
C₁₋₈ alkyl, the C₁₋₈ alkyl being unsubstituted or substituted by C₁₋₈ alkyl, OH, C₆₋₁₂ aryl or by -NR⁹R¹⁰;NR¹¹R¹²;
CU₃;
C₁₋₈ alkylthio, the C₁₋₈ alkylthio being unsubstituted or substituted by C₁₋₈ alkyl, OH, C₆₋₁₂ aryl or-NR⁹R¹⁰; or
C₆₋₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or-NR⁹R¹⁰;
R⁹ and R¹⁰ are independently from each other hydrogen, C₁₋₈ alkyl or C₆₋₁₂ aryl;
R¹¹ and R¹² are independently from each other hydrogen, C₁₋₈ alkyl or C₆₋₁₂ aryl; or
R¹¹ and R¹² form together with the N, to which they are connected, a five- or six-membered ring, which may contain further 1, 2 or 3 heteroatoms selected from the group consisting of O, N and S;
U represents chlorine, fluorine or bromine.

In a more preferred aspect,
- X: represents O;
- z: represents a charge equal to 0 or +1;
- m: represents a number equal to z;
- An⁻: represents chloride;
- M: represents a metal ion selected from the group consisting of Al, Y, Zr, Cr, Fe, Co, Ni, Cu, Zn, Yb;
- n: represents the number 2 or 3;
- A together with Y: is selected from the group consisting of residues of formulae (j), (k), (l) and (m) and their tautomeric forms, the (*) denoting the bond of A to the squaric acid moiety in formula (I), 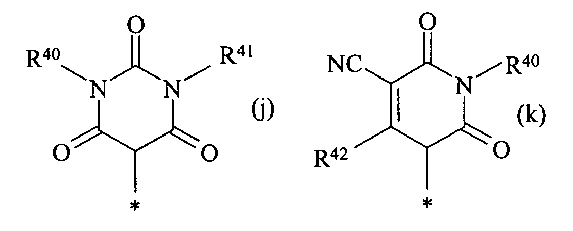 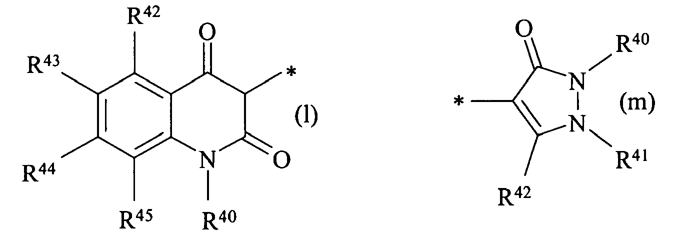 wherein
- R⁴⁰ and R⁴¹: independently from each other represent
hydrogen;
C₁₋₈ alkyl, the C₁₋₈ alkyl being unsubstituted or substituted by C₁₋₈ alkyl, OH, C₆₋₁₂ aryl or-NR⁹R¹⁰;
C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy, -NR⁹R¹⁰; or
C₆₋₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or -NR⁹R¹⁰
- R⁴² to R⁴⁵: independently from each other represent
hydrogen, CN, halogen, NO₂, hydroxyl;
C₁₋₈ alkoxy, the C₁₋₈ alkoxy being unsubstituted or substituted by C₁₋₈ alkyl, OH, C₆₋₁₂ aryl or -NR⁹R¹⁰;
C₁₋₈ alkyl, the C₁₋₈ alkyl being unsubstituted or substituted by C₁₋₈ alkyl, OH, C₆₋₁₂ arylor-NR⁹R¹⁰;
CU₃;
C₁₋₈ alkylthio, the C₁₋₈ alkyl being unsubstituted or substituted by C₁₋₈ alkyl, OH, C₆₋₁₂ aryl or -NR⁹R¹⁰; or
C₆₋₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or -NR⁹R¹⁰;
- R⁹ and R¹⁰: are independently from each other hydrogen, C₁₋₈ alkyl or C₆₋₁₂ aryl;
- R¹¹ and R¹²: are independently from each other hydrogen, C₁₋₈ alkyl or C₆₋₁₂ aryl; or
- R¹¹ and R¹²: form together with the N, to which they are connected, a five- or six-membered ring, which may contain further 1, 2 or 3 heteroatoms selected from the group consisting of O, N and S;
- U: represents chlorine, fluorine or bromine.

In a especially preferred embodiment, compound of formula (I) is represented by formula (IV), 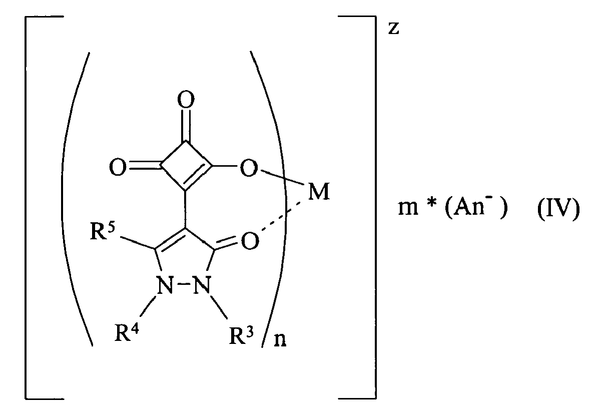 wherein
- z: represents a charge equal to 0 and +1;
- m: represents a number equal to z;
- An: represents chloride;
- M: represents a metal ion selected from the group consisting of Al, Zr, Cr, Co, Ni, Cu, Zn;
- n: represents a whole number from 2 to 3;
- R₃: represents phenyl or p-tolyl;
- R₄: represents methyl or benzyl;
- R₅: represents methyl or phenyl.

In a preferred aspect,
- R²¹: represents C₁₋₈-alkyl, C₁₋₄-hydroxyalkyl, cyclopentyl, cyclohexyl, benzyl, 4-piperidinyl or 3-pyrrolidinyl, the 4-piperidinyl- or 3 pyrrolidinyl-residues can be substituted by 1 or 2 substituents selected from the group consisting of C₁₋₁₂-alkyl and COOR³¹;
- R²⁰ and R²²: represent independently from each other, C₁₋₄-alkyl;
- R²³: represents COOR²⁴;
- R²⁴ and R³¹: independently from each other are C₁₋₁₂-alkyl, C₆₋₈-aryl or C₃₋₈-cycloalkyl;
- R³⁶: represents C₁₋₄-alkyl, cyclopentyl or cyclohexyl;
- R³⁵ and R³⁷: represent independently from each other C₁₋₄-alkyl;
- W: represents a divalent residue selected from the group consisting of formula (a), (e) and (f), the (*) denoting the bonds of W, which are connected to the two CO-groups in formula (III); 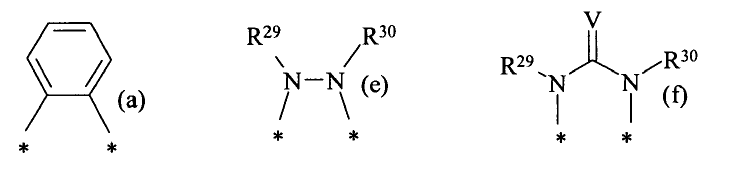
- R²⁹ and R³⁰: represent independently from each other H, C₁₋₁₂-alkyl, C₆₋₈-aryl or C₆₋₈-aryl-C₁₋₈-alkyl;
- V: represents O or S.

Even more preferably the compounds of formula (II) or (III) are selected from the group consisting of compounds of formulae (V), (VI), (VII), (VIII), (IX), (X), (XI), (XII), (XIII), (XIV), (XV) and (XVI).

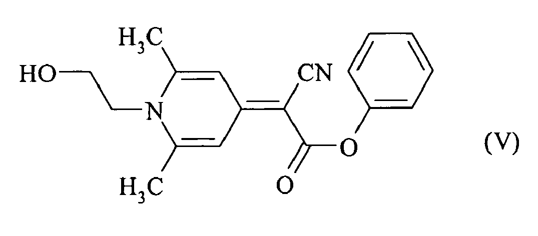

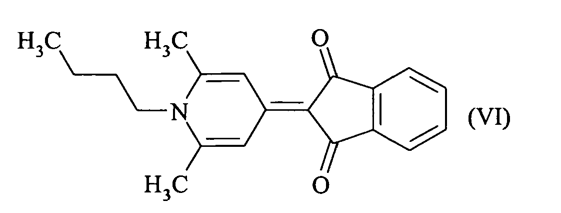

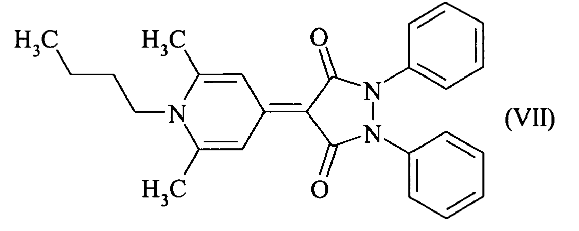

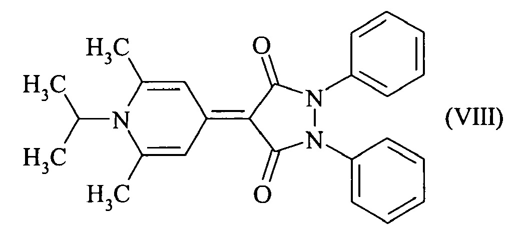

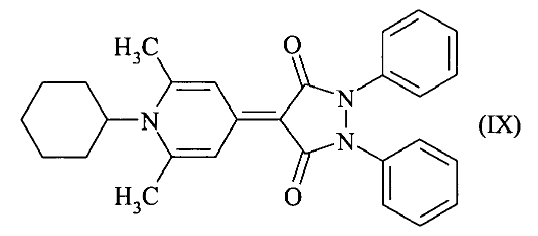

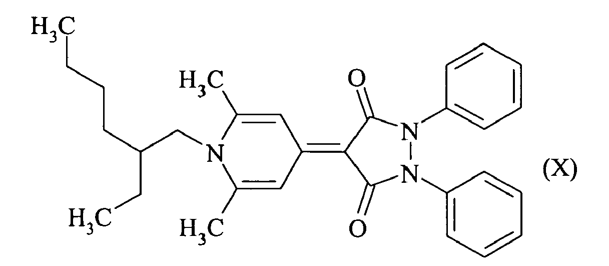

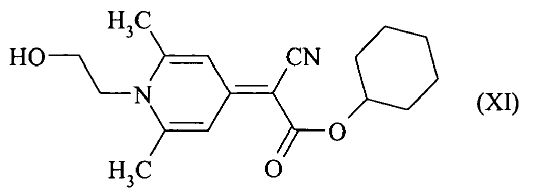

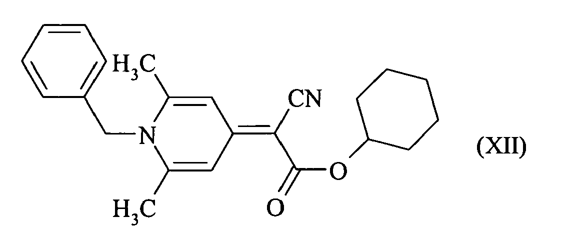

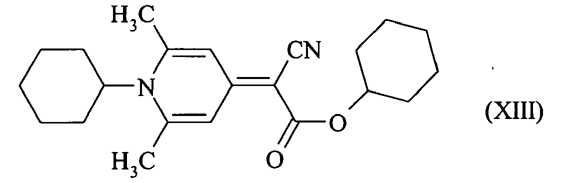

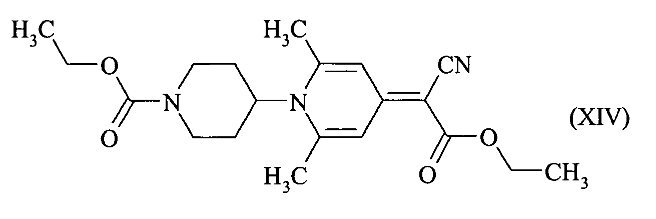

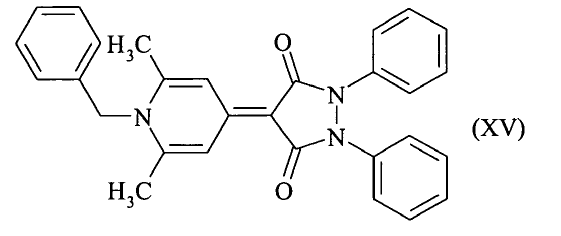

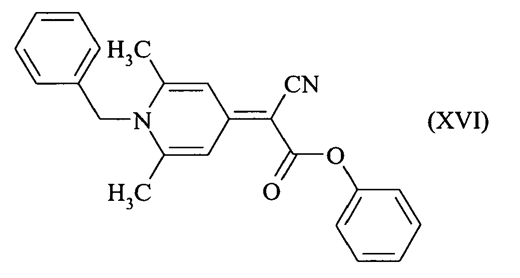

The relative ratio of the combined weights of the compounds of formula (I) or (IV) to the combined weights of the compounds of formula (II) and/or (III) in the compositions is preferably of from between 0.01 and 0.99 to 0.99 and 0.01, more preferably of from between 0.1 and 0.9 to 0.9 and 0.1, even more preferably of from between 0.2 and 0.8 to 0.8 and 0.2, especially of from between 0.3 and 0.7 to 0.7 and 0.3.

The compositions comprise preferably at least 10 % by weight, more preferably at least 25% by weight, even more preferably at least 50% by weight, especially at least 75% by weight, in particular at least 90% by weight, based on the total weight of the composition, of the combined amounts of the compounds of formula (I) and/or (IV) and (II) and/or (III). The compositions can also consist only of compounds of formula (I) and/or (IV) and (II) and/or (III).

Preferably the compositions comprise 1, 2 or 3, more preferably 1 or 2, even more preferably 1 compound of formula (I) or (IV), and 1, 2 or 3, more preferably 1 or 2, compounds of formula (II) and/or (III), more preferably only 1 compound of formula (II) or (III).

The compounds of formula (I), (II), (III) and (IV) are known compounds and can be produced according to or in analogy to known procedures.

The compositions comprising at least one compound of formula (I) and at least one compound of formula (II) or (III) are prepared by physically combining the (individual) compounds, preferably by blending or mixing, the blending or mixing is preferably done in the solid, molten or dissolved state of the compounds; preferably the blending or mixing is done by dry blending, by mixing the slurries or the solutions of the components; or the mixing is done by a combination of any of the mentioned measures. For the dry blending at least one compound of formula (I) or (IV) is mixed physically with at least one compound of formula (II) or (III) in a mill, in a shaker or in any other mechanical device leading to homogeneous mixture of compounds (I) or (IV) and (II) or (III).

For the slurry blending at least one compound of formula (I) or (IV) is mixed physically with at least one compound of formula (II) or (III) in a solvent. The solvent is preferably at least one organic solvent, water or a mixture of at least one organic solvent with water. To obtain dry blends, the solvent is removed conventional methods known in the art, preferably by filtration or destillation, and the resulting presscake is dried.

In the case that the compounds are blended in form of their solutions, the compounds are dissolved in the solvent either individually or in form of a premixture of the compounds.

A further subject of the invention is therefore a process for the preparation of the compositions comprising at least one compound of formula (I) or (IV) and at least one compound of formula (II) or (III) by physically combining the (individual) compounds.

A further subject of the invention is the use of the compositions comprising at least one compound of formula (I) or (IV) and at least one compound of formula (II) or (III) and the use of the compositions comprising at least one compound of formula (I) or (IV) and at least one compound of formula (II) or (III) in all the preferred aspects of the formula (I), (II), (III) and (IV) as described above, in an optical layer, preferably for optical data recording.

A further subject of the invention is the use of the compositions comprising at least one compound of formula (I) or (IV) and at least one compound of formula (II) or (III) and the use of the compositions comprising at least one compound of formula (I) or (IV) and at least one compound of formula (II) or (III) in all the preferred aspects of the formula (I), (II), (III) and (IV) as described above, as a dye in an optical layer, preferably for optical data recording.

A further subject of the present invention is an optical layer comprising a composition comprising at least one compound of formula (I) or (IV) and at least one compound of formula (II) or (III), and the use of said optical layer for optical data recording media. A further subject of the invention therefore is an optical data recording medium comprising an optical layer comprising a composition comprising at least one compound of formula (I) or (IV) and at least one compound of formula (II) or (III).

Further, the invention relates to a method for producing optical layers on a substrate comprising the following steps
(a) providing a substrate,
(b) dissolving the compounds of formulae (I) or (IV) and (II) or (III) by
   (b1) dissolving a composition comprising at least one compound of formula (I) or (IV) and at least one compound of formula (II) or (III) in an organic solvent to form a solution, or
   (b2a) dissolving at least one compound of formula (I) or (IV) in an organic solvent to form a solution, and
   (b2b) dissolving at least one compound of formula (II) (III) in an organic solvent to form a solution, or
   (b3) dissolving at least one compound of formula (I) or (IV) together with at least one compound of formula (II) or (III) in an organic solvent to form a solution,
(c) coating the solution or the solutions on the substrate by
   (c1) coating the solution (b1) or the solution (b3) on the substrate (a), or
   (c2) coating the solution (b2a) on the substrate (a), evaporating the solvent, and coating the solution (b2b) on the substrate (a),
(d) evaporating the solvent to form an optical layer (also called dye layer or recording layer).

### (a) Substrate

The substrate, which functions as support for the layers applied thereto, is advantageously semi-transparent (transmittance T>10%) or preferably transparent (transmittance T>90%). The support can have a thickness of from 0.01 to 10 mm, preferably from 0.1 to 5 mm.

Suitable substrates are, for example, glass, minerals, ceramics and thermosetting or thermoplastic plastics. Preferred supports are glass and homo- or co-polymeric plastics. Suitable plastics are, for example, thermoplastic polycarbonates, polyamides, polyesters, polyacrylates and polymethacrylates, polyurethanes, polyolefins, polyvinyl chloride, polyvinylidene fluoride, polyimides, thermosetting polyesters and epoxy resins. The most preferred substrates are polycarbonate (PC) or polymethylmethacrylate (PMMA).

The substrate can be in pure form or may also comprise customary additives, for example UV absorbers as light-stabilizers for the optical layer.

The substrate is advantageously transparent over at least a portion of the range from 350 to 500 nm, so that it is permeable to at least 90% of the incident light of the writing or readout wavelength.

### (b) Organic solvents

Organic solvents are selected from C₁₋₈ alcohol, halogen substituted C₁₋₈ alcohols, C₁₋₈ ketone, C₁₋₈ ether, halogen substituted C₁₋₄ alkane, nitriles, preferably acetonitrile, or amides, or mixtures thereof.

Preferred C₁₋₈ alcohols or halogen substituted C₁₋₈ alcohols are for example methanol, ethanol, isopropanol, diacetone alcohol (DAA), 2,2,3,3-tetrafluoropropanol, trichloroethanol, 2-chloroethanol, octafluoropentanol or hexafluorobutanol, more preferred 2,2,3,3-tetrafluoro-1-propanol.

Preferred C₁₋₈ ketones are for example acetone, methylisobutylketone, methylethylketone, or 3-hydroxy-3-methyl-2-butanone.

Preferred halogen substituted C₁₋₄ alkanes are for example chloroform, dichloromethane or 1-chlorobutane.

Preferred amides are for example dimethylformamide or dimethylacetamide.

### (c) Coating methods

Suitable coating methods are, for example, immersion, pouring, brush-coating, blade-application and spin-coating, as well as vapor-deposition methods carried out under a high vacuum. When pouring methods are used, solutions in organic solvents are generally used. When solvents are employed, care should be taken that the supports used are insensitive to those solvents. The optical layer is preferably applied by spin-coating with a dye solution.

### (d) Optical layer (also called dye layer or recording layer)

The optical layer is preferably arranged between the transparent substrate and the reflecting layer. The thickness of the recording layer is from 10 to 1000 nm, preferably from 30 to 300 nm, more preferably from 70 to 250 nm, especially about 80 nm, for example from 60 to 120 nm.

The optical layer comprises a compositions comprising at least one compound of formula (I) or (IV) and at least one compound of formula (II) or (III) preferably in an amount sufficient to have a substantial influence on the refractive index, for example at least 30% by weight of the total weight of the optical layer, more preferably at least 60% by weight, most preferably at least 80% by weight.

Further customary components are stabilizers, for example ¹0₂-, triplet- or luminescence quenchers, melting-point reducers, decomposition accelerators or any other additives that have already been described in optical data recording media. Preferably, stabilizers or fluorescence-quenchers are added if desired.

Stabilizers, ¹0₂-, triplet- or luminescence-quenchers are, for example, metal complexes ofN- or S-containing enolates, phenolates, bisphenolates, thiolates or bisthiolates, hindered phenols and derivatives thereof such as o-hydroxyphenyl-triazoles or -triazines or other UV absorbers, such as hindered amines (TEMPO or HALS, as well as nitroxides or NOR-HALS), and also as cations diimmonium, Paraquat^{™} or Orthoquat salts, such as ^{®}Kayasorb IRG 022, ^{®}Kayasorb IRG 040, optionally also as radical ions, such as N,N,N',N'-tetrakis(4-dibutylaminophenyl)-p-phenylene amine-ammonium hexafluorophosphate, hexafluoroantimonate or perchlorate. The latter are available from Organica (Wolfen/DE); ^{®}Kayasorb brands are available from Nippon Kayaku Co. Ltd. In a preferred aspect, the present invention provides for an optical layer suitable for high-density recording material, e.g. of the WORM disc format, in a laser wavelength range of from 350-450nm, preferably around 405 nm.

### Preparation of the optical data recording medium

A method for producing an optical data recording medium comprising an optical layer according to the invention usually comprises the following additional steps
(e) applying a metal layer (also called reflective layer) onto the optical layer,
(f) applying a second polymer based layer to complete the disk (cover layer or protective layer).

### (e) Reflective layer

The application of the metallic reflective layer is preferably effected by sputtering, vapor-deposition in vacuum or by chemical vapor deposition (CVD). The sputtering technique is especially preferred for the application of the metallic reflective layer. Reflecting materials suitable for the reflective layer include especially metals, which provide good reflection of the laser radiation used for recording and playback, for example the metals of Main Groups III, IV and V and of the Sub-groups of the Periodic Table of the Elements. Al, In, Sn, Pb, Sb, Bi, Cu, Ag, Au, Zn, Cd, Hg, Sc, Y, La, Ti, Zr, Hf, V, Nb, Ta, Cr, Mo, W, Fe, Co, Ni, Ru, Rh, Pd, Os, Ir, Pt, Ce, Pr, Nd, Pm, Sm, Eu, Gd, Tb, Dy, Ho, Er, Tm, Yb and Lu and alloys thereof are especially suitable. Special preference is given to a reflective layer of aluminum, silver, copper, gold or an alloy thereof, on account of their high reflectivity and ease of production.

### (f) Cover layer (also called protective layer)

Materials suitable for the cover layer include plastics, which are applied in a thin layer to the support or the uppermost layer either directly or with the aid of adhesive layers. The material of the cover layer may for example be the same as the material of the substrate. It is advantageous to select mechanically and thermally stable plastics having good surface properties, which may be modified further.

The plastics may be thermosetting plastics and thermoplastic plastics. Preference is given to radiation-cured (e.g. using UV radiation) protective layers, which are particularly simple and economical to produce. A wide variety of radiation-curable materials are known. Examples of radiation-curable monomers and oligomers are acrylates and methacrylates of diols, triols and tetrols, polyimides of aromatic tetracarboxylic acids and aromatic diamines having C₁-C₄alkyl groups in at least two ortho-positions of the amino groups, and oligomers with dialkylmaleinimidyl groups, e.g. dimethyl maleinimidyl groups.

A high-density optical data recording medium according to the invention therefore preferably is a recordable optical disc comprising: a first substrate, which is a transparent substrate with grooves, a optical layer (recording layer), which is formed on the first substrate surface using the compositions comprising at least one compound of formula (I) or (IV) and at least one compound of formula (II) or (III), a reflective layer formed on the optical layer, a second substrate, which is a transparent substrate connected to the reflective layer with an attachment layer.

The optical data recording medium according to the invention is preferably a recordable optical disc of the WORM type. It may be used, for example, as a playable HD-DVD (high density digital versatile disc) or Blu-ray^{®} disc, as storage medium for a computer or as an identification and security card or for the production of diffractive optical elements, for example holograms.

The optical data recording media according to the invention may also have additional layers, for example interference layers. It is also possible to construct optical data recording media having a plurality of (for example two) recording layers. The structure and the use of such materials are known to the person skilled in the art. Preferred, if present, are interference layers that are arranged between the recording layer and the reflecting layer and/or between the recording layer and the substrate and consist of a dielectric material of TiO₂, Si₃N₄, ZnS or silicone resins.

These optical data recording media according to the invention can be produced by processes known in the art.

### Readout methods

The structure of the optical data recording medium according to the invention is governed primarily by the readout method; known function principles include the measurement of the change in the transmission or, preferably, in the reflection, but it is also known to measure, for example, the fluorescence instead of the transmission or reflection.

When the optical data recording medium is structured for a change in reflection, the following structures can be used: transparent support / recording layer (optionally multilayered) / reflective layer and, if expedient, protective layer (not necessarily transparent); or support (not necessarily transparent) / reflective layer / recording layer and, if expedient, transparent protective layer. In the first case, the light is incident from the support side, whereas in the latter case the radiation is incident from the recording layer side or, where applicable, from the protective layer side. In both cases the light detector is located on the same side as the light source. The first-mentioned structure of the recording material to be used according to the invention is generally preferred. When the optical data recording medium is structured for a change in light transmission, the following different structure comes into consideration: transparent support/recording layer (optionally multilayered) and, if expedient, transparent protective layer. The light for recording and for readout can be incident either from the support side or from the recording layer side or, where applicable, from the protective layer side, the light detector in this case always being located on the opposite side.

Suitable lasers are those having a wavelength of 350-500 nm, for example commercially available lasers having a wavelength of 405 to 414 nm, especially semi-conductor lasers. The recording is done, for example, point for point, by modulating the laser in accordance with the mark lengths and focusing its radiation onto the recording layer. It is known from the specialist literature that other methods are currently being developed which may also be suitable for use.

The process according to the invention allows the storage of information with great reliability and stability, distinguished by very good mechanical and thermal stability and by high light stability and by sharp boundary zones of the pits. Special advantages include the high contrast, the low jitter and the surprisingly high signal/noise ratio, so that excellent readout is achieved.

The readout of information is carried out according to methods known in the art by registering the change in absorption or reflection using laser radiation.

The invention accordingly relates also to a method for the optical data recording, storage and playback of information, wherein an optical data recording medium according to the invention is used. The recording and the playback advantageously take place in a wavelength range of from 350 to 500 nm.

The compositions comprising at least one compound of formula (I) or (IV) and at least one compound of formula (II) or (III) provide for particularly preferable properties when used in optical layers for optical data recording media according to the invention. They possess the required optical characteristics, demonstrated when used in the form of a solid film:
- an advantageously homogeneous, amorphous and low-scattering optical layer,
- a high refractive index at the longer wavelength flank of the absorption band, which preferably achieves n values of the refractive index of from 1.0 to 3.0 in the range of from 350 to 500 nm,
- a high sensitivity under laser radiation of high power density and good playback characteristics in the desired spectral range,
- an enhanced photosensitivity and stability (in daylight and under laser radiation of low power density) compared to dyes already known in the art,
- an uniform script width and a high contrast,
- an absorption maximum λmax in the preferred range between 350 nm and 470 nm as being preferred for blue laser applications, more precisely from 350 to 390 nm,
- a decomposition point (DP) in the preferred temperature range between 220°C and 350°C, more precisely 240°C to 340°C,
- a sufficient heat release (HR).
- Recording performance of a compound is related to specific parameters measured on disc like:
- a high reflectivity (R),
- a low laser recording power (Pw or OPC: optimum power control),
- good readout stability at several laser reading powers,
- an appropriate carrier to noise ratio (CNR).

The absorption edge is surprisingly steep even in the solid phase.

The compositions comprising at least one compound of formula (I) or (IV) and at least one compound of formula (II) or (III) also show a narrow decomposition temperature of 220-350°C, fitting with the thermal requirements. Additionally, these compositions show a high solubility in organic solvents, which is ideal for the spin-coating process to manufacture optical layers.

Surprisingly the compositions comprising at least one compound of formula (I) or (IV) and at least one compound of formula (II) or (III) provide for unexpected better results, when compared with the individual components.

This was not expected because the compound of formula (2) (see example 1) has a melting point and no thermal decomposition until 350 °C.

It is known in the art that the use of a dye with a melting point instead of a thermal decomposition point is detrimental for optical recording process using laser. Therefore the addition of compound (2) to compounds of formula (I) was estimated to have a detrimental effect on the recording properties of the compound of formula (I).

The absorption maximum of a compound of formula (II) is generally higher than of a compound of formula (I). This usually leads to a reduction of reflectivity at 405 nm.

Therefore, it was unexpected that the reflectivity of compositions comprising at least one compound of formula (I) or (IV) and at least one compound of formula (II) or (III) was increased.

### Examples

### UV-vis

For UV-vis spectra, λ max and ε values of a compound are determined by using an UV-vis spectrophotometer, the compositions were dissolved in CH₂Cl₂, DMSO or in tfp. The values are obtained by balancing the measurements performed on compound solutions at three different concentrations.

### Thermal Decomposition: Decomposition point (DP) and heat release (HR)

For the determination of DP and HR, the compound or the composition is incorporated into a sealed aluminum pan. Analysis conditions are as following: Temperature range from 25 to 400°C, heating rate 10°C/min, nitrogen flow of 50 ml/min. Values are determined by single measurement.

### Melting point (MP)

For the determination of melting point, the compound or the composition is incorporated in a glass capillary. The capillary was heated using the following profile: temperature range from 20 to 350 °C, heating rate 2 °C/min.

### Carrier to noise ratio (CNR)

CNR is a measure of signal strength relative to background noise. The ratio is measured in decibels (dB).

CNR is measured in a state in which information has been recorded in the adjacent tracks. The higher the CNR the better is the signal resolution.

### Reflectivity (R)

A definition and the measuring techniques for the light reflectivity (R) is described in a book available from DVD Format Logo Licensing Co., Ltd. for example, Annex D of Version 0.9, PART 1 Physical Specifications, DVD Specifications for High Density Read-Only Disk.

### Example 1

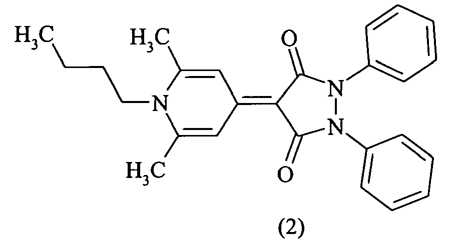

Analytical data for compound of formula (2):
λ max = 368 nm, ε = 145 L/g*cm
MP: 239 °C
DC: No decomposition until 350 °C.

### Example 2

0.45 g of a compound of formula (1) and 0.05 g of a compound of formula (2) are dissolved in 10 ml of 2,2,3,3-tetrafluoropropan-1-ol. After stirring at room temperature for 30 min, the solvent is evaporated in vacuum. The remaining yellow residue is dried in vacuum at 60 °C for 4 h. 0.5 g of a composition comprising the compounds of formula (1) and (2) are obtained.
λ max = 350 nm, ε = 53.5 L/g*cm

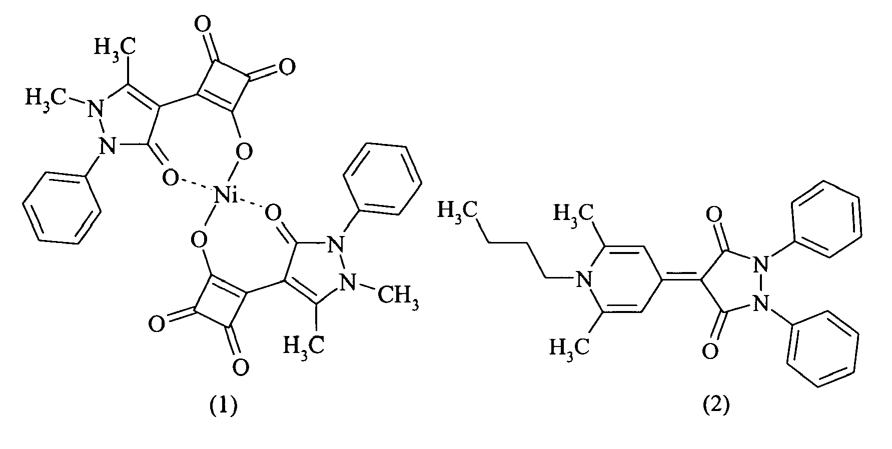

### Examples 3 and 4

The procedure of example 2 was repeated according to the details given in Table (A) and (B), to yield the respective compositions.

| **Table (A)** | | | | | |
|---|---|---|---|---|---|
| **Ex.** | **Compound 1** | | **Compound 2** | | **Yield** |
| | **[g]** | **of formula** | **[g]** | **of formula** | **[g]** |
| 2 | 0.45 | (1) | 0.05 | (2) | 0.5 |
| 3 | 0.40 | (1) | 0.10 | (2) | 0.5 |
| 4 | 0.35 | (1) | 0.15 | (2) | 0.5 |

| **Table (B)** | | | | |
|---|---|---|---|---|
| **Ex.** | **λ max [nm]** | **ε (λ max) [l/g/cm]** | **DP [°C]** | **MP** |
| | | | | **[°C]** |
| 2 | 350 | 53.5 | 316 | no melting point |
| 3 | 354 | 53.3 | 308 | no melting point |
| 4 | 358 | 57.8 | 304 | no melting point |

### Application Example 1

The optical and thermal properties of the composition comprising compounds of formula (I) or (IV) and of (II) or (III) were studied. The composition comprising compounds formula (I) or (IV) and of formula (II) or (III) show high absorption at the desired wavelengths. In addition, the shapes of the absorption spectra, that still remain critical to the disc reflectivity and formation of clean mark edges, are composed of one major band, comprised in a range of from 350 to 500 nm.

More precisely, n values of the refractive index were evaluated between 1.0 and 1.9. Light stabilities were found comparable to commercial dyes which are already stabilized with quenchers for the use in optical data recording.

Sharp threshold of thermal decomposition within the required temperature range characterizes the composition comprising compounds formula (I) or (IV) and of formula (II) or (III) which are desirable for the application in optical layers for optical data recording.

### Application example 2 Optical layer and optical data recording medium

For the optical layer, a 25 nm thick reflection layer of silver was applied to a 1.1 mm thick spiral like pre-grooved polycarbonate disc (made by injection molding, diameter 120 mm, groove depth 28 nm, track width 140 nm, track spacing 320 nm) using sputtering technology. Using the spin-coating process a 2% solution of solution of the composition comprising compounds formula (I) or (IV) and of formula (II) or (III) in 2,2,3,3-tetrafluoropropanol was applied onto the reflection layer (recording layer). After drying for 20 min at 75 °C the resulting thickness of recording layer was 80 nm. On the recording layer was applied a 10 nm thick layer of SiON by reactive sputtering as a barrier layer. For protecting the reflective layer, recording layer and barrier-layer, a cover layer/film consisting of polycarbonate (80 µm thickness) is laminated on the surface of the barrier layer using binder. The total thickness of cover layer and binder is set to be 100 µm. The barrier layer, binding layer and cover layer are connected by pressure welding.

The testing conditions are the following ones:
- Numerical aperture (NA) of the optical head: 0.85
- Wavelength of a laser light for recording and reproduction: 405 nm
- Track pitch: 0.32 µm

Results of the evaluation tests are summarized in table (C), Pw and CNR were determined for the 8T signal.

| **Table (C)** | | | |
|---|---|---|---|
| **Example** | **Pw** | **CNR** | **Reflectivity** |
| | **[mW]** | **[db]** | **[%]** |
| **2** | 6 | 40 | 31.6 |
| **3** | 6 | 49 | 35.7 |
| **4** | 6 | 60 | 37.8 |

### Comparative example 1

Results of the evaluation tests for the compound of formula (1) are summarized in table (D), Pw and CNR were determined for the 8T signal.

Reflectivity and CNR are unexpectedly and significantly improved in examples 2 to 4.

| **Table (D)** | | | |
|---|---|---|---|
| **Compound** | **Pw** | **CNR** | **Reflectivity** |
| **of formula** | **[mW]** | **[db]** | **[%]** |
| **1** | **6** | **12** | **25** |

## Claims

1. A composition comprising
at least one compound of formula (I), 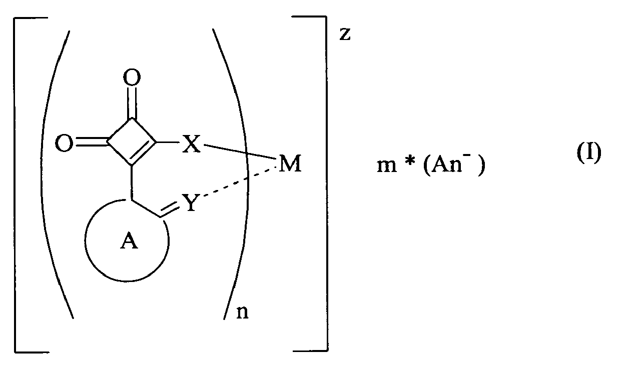 wherein
X is selected from the group consisting of O, S and NR¹;
Y is selected from the group consisting of O, S or imino-nitrogen N-R²;
R¹ and R² are independently from each other selected from the group consisting of hydrogen, C₁₋₁₂ alkyl, benzyl and C₆₋₁₂ aryl; the C₁₋₁₂ alkyl being unsubstituted or substituted by OH, C₆₋₁₂ aryl, halogen, -NR⁹R¹⁰;
z represents a charge equal to 0, +1 or +2 ;
m represents a number equal to z;
An⁻ represents an anion counter-part selected from inorganic anions such as iodine, fluorine, bromine, chlorine, perchlorate, hexafluoroantimonate, hexafluorophosphate, tetrafluoroborate, tetraphenylborate or from organic anions such as dicyanoamide (N(CN)₂) or trifluoromethanesulfonimide (N(SO₂CF₃)₂; or
An⁻ can also be an anionic azo metal complex;
M represents a metal ion;
A is a five or six membered aromatic or heteroaromatic cycle, the aromatic or heteroaromatic cycle can be annealed with a five or six membered aromatic or heteroaromatic cycle, the heteroaromatic cycles contain 1, 2 or 3 heteroatoms selected from the group consisting of O, N and S, the aromatic or heteroaromatic cycles can be further substituted by 1 to 8 substituents independently from each other selected from the group consisting of
hydrogen, CN, halogen, N0₂, OH, SH,
C₁₋₈ alkyl, the C₁₋₈-alkyl being unsubstituted or substituted by C₁₋₈ alkyl, OH, C₆₋₁₂ aryl or -NR⁹R¹⁰;
CU₃;
C₆-C₁₂ aryl, the C₆₋₁₂ aryl being unsubstituted or substituted by C₁₋₈ alkyl, OH, N0₂, CN, halogen, C₆₋₁₂ aryl, C₁-C₈ alkoxy, -NR⁹R¹⁰;
C₁₋₈ alkoxy, the C₁₋₈ alkoxy being unsubstituted or substituted by C₁₋₈ alkyl, OH, C₆₋₁₂ aryl or-NR¹¹R¹²;
NR¹¹R¹²; and
C₁₋₈ alkylthio, the C₁₋₈ alkylthio being unsubstituted or substituted by C₁₋₈ alkyl, OH, C₆₋₁₂ aryl or-NR⁹R¹⁰; the
R⁹ and R¹⁰ are independently from each other hydrogen, C₁₋₈ alkyl or C₆₋₁₂ aryl;
R¹¹ and R¹² are independently from each other hydrogen, C₁₋₈ alkyl or C₆₋₁₂ aryl; or
R¹¹ and R¹² form together with the N, to which they are connected, a five- or six-membered ring, which may contain further 1,2 or 3 heteroatoms selected from the group consisting of O, N and S;
U represents chlorine, fluorine or bromine;
n represents a number 1, 2 or 3;
and at least one compound selected from the group consisting of compound of formula (II) and compound of formula (III), 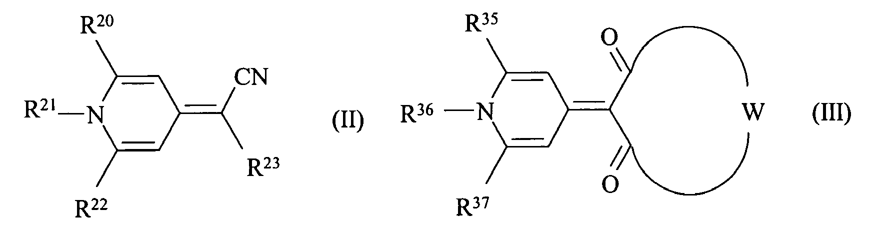 wherein
R²¹ and R³⁶ independently from each other are selected from the group consisting of C₁₋₁₂-alkyl, C₁₋₁₂-hydroxyalkyl, C₃₋₁₂-cycloalkyl, C₆₋₁₂-aryl, C₆₋₁₂-aryl-C₁₋₁₂-alkyl and a five or six membered heterocycle containing 1, 2 or 3 heteroatoms selected from the group consisting of N, O or S, the heterocycle can be substituted by 1, 2 or 3 substituents selected from the group consisting of C₁₋₁₂-alkyl, C₃₋₁₂-cycloalkyl, C₆₋₁₂-aryl, C₆₋₁₂-aryl-C₁₋₁₂-alkyl and COOR³¹;
R²⁰, R²² , R³⁵ and R³⁷ independently from each other are selected from the group consisting of hydrogen, C₁₋₄-alkyl, C₆₋₁₂-aryl and C₆₋₁₂-aryl-C₁₋₁₂-alkyl;
R²³ represents COOR²⁴, CONHR²⁵, CONR²⁶R²⁷, CONHR²⁸ or CN;
R²⁴ and R³¹ are independently from each other H, C₁₋₁₂-alkyl, C₃₋₁₂-cycloalkyl, C₆₋₁₂-aryl or C₆₋₁₂-aryl-C₁₋₁₂-alkyl;
R²⁵ represents C₁₋₁₂-alkyl;
R²⁶ and R²⁷ form together with the N, to which they are connected, a pyrrolidine-, piperidine- or morpholine-ring;
R²⁸ represents C₆₋₁₂ aryl;
W represents a divalent residue selected from the group consisting of formula (a), (b), (c), (d), (e) and (f), the (*) denoting the bonds of W, which are connected to the two CO-groups in formula (III); 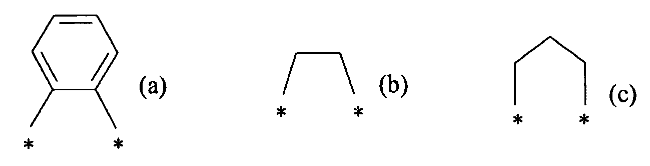 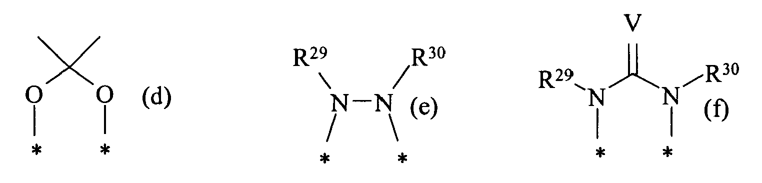
R²⁹ and R³⁰ represent independently from each other H, C₁₋₁₂-alkyl, C₆₋₁₂-aryl or C₆₋₁₂-aryl-C₁₋₁₂-alkyl;
V represents O or S.

2. A composition according to claim 1, wherein
X represents O or S;
z represents a charge equal to 0 or +1;
m represents a number equal to z;
An⁻ represents an anion counter-part selected from inorganic anions such as chlorine, perchlorate, hexafluoroantimonate, hexafluorophosphate, tetrafluoroborate, tetraphenylborate or from organic anions such as dicyanoamide (N(CN)₂) or trifluoromethanesulfonimide (N(SO₂CF₃)₂; or
An⁻ can also be an anionic azo metal complex;
M represents a metal ion selected from the group consisting of Ca, Sr, Ba, Al, Ga, In, Sc, Y, Ti, Zr, V, Nb, Ta, Cr, Mo, W, Mn, Fe, Ru, Os, Co, Rh, Ir, Ni, Pd, Pt, Cu, Ag, Au, Zn, Cd, Hg, La, Ce, Pr, Nd, Pm, Sm, Eu, Gd, Tb, Dy, Ho, Er, Tm, Yb, Lu;
n represents a number 1, 2 or 3;
A together with Y is selected from the group consisting of residues of formulae (g), (h), (i), (j), (k), (l), (m), (n), (o), (p), (q), (r) and (s) and their tautomeric forms, the (*) denoting the bond of A to the squaric acid moiety in formula (I), 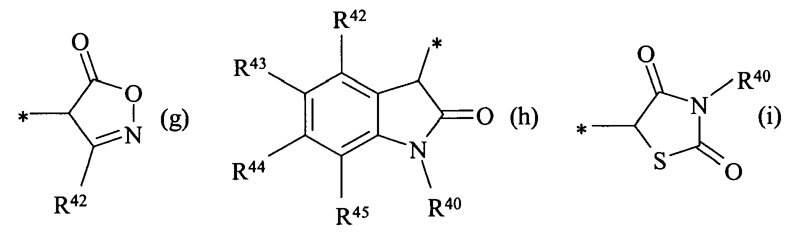 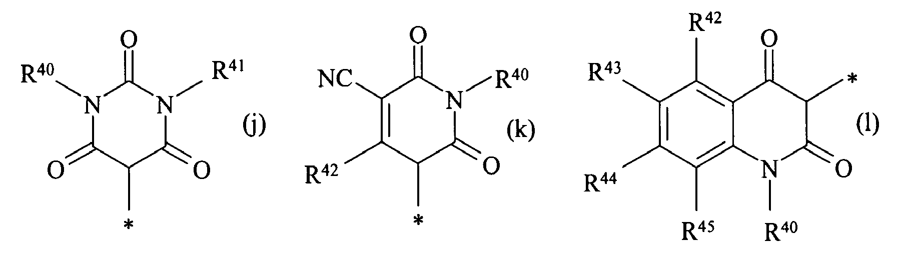 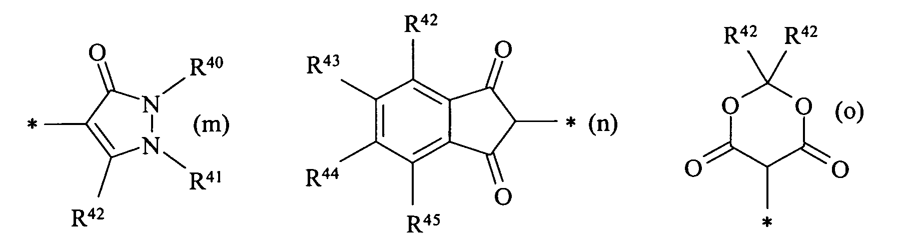 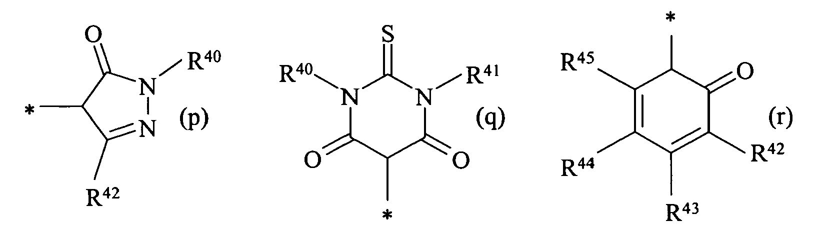 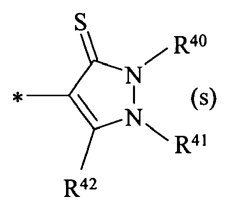
wherein
R⁴⁰ and R⁴¹ independently from each other represent hydrogen,
C₁₋₈ alkyl, the C₁₋₈-alkyl being unsubstituted or substituted by C₁₋₈ alkyl, OH, C₆₋₁₂ aryl or -NR⁹R¹⁰;
CU₃;
C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy, -NR⁹R¹⁰; or
C₆-C₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy, -NR⁹R¹⁰;
R⁴² to R⁴⁵ independently from each other represent
hydrogen, CN, halogen, NO₂, OH,
C₁₋₈ alkoxy, the C₁₋₈ alkoxy being unsubstituted or substituted by C₁₋₈ alkyl, OH, C₆₋₁₂ aryl or-NR¹¹R¹²;
NR¹¹R¹²;
C₁₋₈ alkyl, the C₁₋₈ alkyl being unsubstituted or substituted by C₁₋₈ alkyl, OH, C₆₋₁₂ aryl or by -NR⁹R¹⁰;
CU₃;
C₁₋₈ alkylthio, the C₁₋₈ alkylthio being unsubstituted or substituted by C₁₋₈ alkyl, OH, C₆₋₁₂ aryl or-NR⁹R¹⁰; or
C₆₋₁₂ aryl, the C₆₋₁₂ aryl being unsubstituted or substituted by C₁₋₈ alkyl, OH, N0₂, CN, halogen, C₆₋₁₂ aryl, C₁-C₈ alkoxy or -NR⁹R¹⁰;
R⁹ and R¹⁰ are independently from each other hydrogen, C₁₋₈ alkyl or C₆₋₁₂ aryl;
R¹¹ and R¹² are independently from each other hydrogen, C₁₋₈ alkyl or C₆₋₁₂ aryl; or
R¹¹ and R¹² form together with the N, to which they are connected, a five- or six-membered ring, which may contain further 1, 2 or 3 heteroatoms selected from the group consisting of O, N and S;
U represents chlorine, fluorine or bromine.

3. A composition according to claim 1 or 2, wherein
X represents O;
z represents a charge equal to 0 or +1;
m represents a number equal to z;
An⁻ represents chloride;
M represents a metal ion selected from the group consisting of Al, Y, Zr, Cr, Fe, Co, Ni, Cu, Zn, Yb;
n represents the number 2 or 3;
A together with Y is selected from the group consisting of residues of formulae (j), (k), (l) and (m) and their tautomeric forms, the (*) denoting the bond of A to the squaric acid moiety in formula (I), 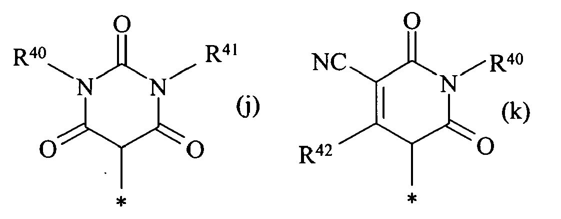 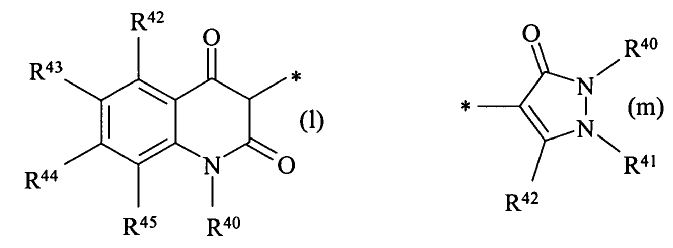 wherein
R⁴⁰ and R⁴¹ independently from each other represent
hydrogen;
C₁₋₈ alkyl, the C₁₋₈ alkyl being unsubstituted or substituted by C₁₋₈ alkyl, OH, C₆₋₁₂ aryl or-NR⁹R¹⁰;
C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy, -NR⁹R¹⁰; or
C₆₋₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or -NR⁹R¹⁰;
R⁴² to R⁴⁵ independently from each other represent
hydrogen, CN, halogen, NO₂, hydroxyl;
C₁₋₈ alkoxy, the C₁₋₈ alkoxy being unsubstituted or substituted by C₁₋₈ alkyl, OH, C₆₋₁₂ aryl or -NR⁹R¹⁰;
NR¹¹R¹²;
C₁₋₈ alkyl, the C₁₋₈ alkyl being unsubstituted or substituted by C₁₋₈ alkyl, OH, C₆₋₁₂ aryl or-NR⁹R¹⁰;
CU₃;
C₁₋₈ alkylthio, the C₁₋₈ alkyl being unsubstituted or substituted by C₁₋₈ alkyl, OH, C₆₋₁₂ aryl or -NR⁹R¹⁰; or
C₆₋₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or -NR⁹R¹⁰;
R⁹ and R¹⁰ are independently from each other hydrogen, C₁₋₈ alkyl or C₆₋₁₂ aryl;
R¹¹ and R¹² are independently from each other hydrogen, C₁₋₈ alkyl or C₆₋₁₂ aryl; or
R¹¹ and R¹² form together with the N, to which they are connected, a five- or six-membered ring, which may contain further 1, 2 or 3 heteroatoms selected from the group consisting of O, N and S;
U represents chlorine, fluorine or bromine.

4. A composition according to one or more of claims 1 to 3, wherein
R²¹ represents C₁₋₈-alkyl, C₁₋₄-hydroxyalkyl, cyclopentyl, cyclohexyl, benzyl, 4-piperidinyl or 3-pyrrolidinyl, the 4-piperidinyl- or 3 pyrrolidinyl-residues can be substituted by 1 or 2 substituents selected from the group consisting of C₁₋₁₂-alkyl and COOR³¹;
R²⁰ and R²² represent independently from each other, C₁₋₄-alkyl;
R²³ represents COOR²⁴;
R²⁴ and R³¹ independently from each other are C₁₋₁₂-alkyl, C₆₋₈-aryl or C₃₋₈-cycloalkyl;
R³⁶ represents C₁₋₄-alkyl, cyclopentyl or cyclohexyl;
R³⁵ and R³⁷ represent independently from each other C₁₋₄-alkyl;
W represents a divalent residue selected from the group consisting of formula (a), (e) and (f), the (*) denoting the bonds of W, which are connected to the two CO-groups in formula (III); 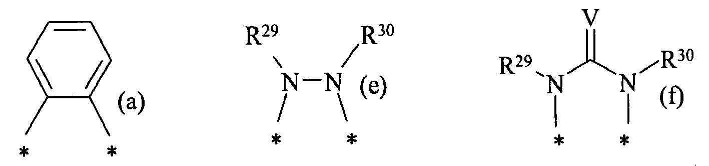
R²⁹ and R³⁰ represent independently from each other H, C₁₋₁₂-alkyl, C₆₋₈-aryl or C₆₋₈-aryl-C₁₋₈-alkyl;
V represents O or S.

5. A composition according to one or more of claims 1 to 4, wherein the compound of formula (I) is represented by formula (IV), 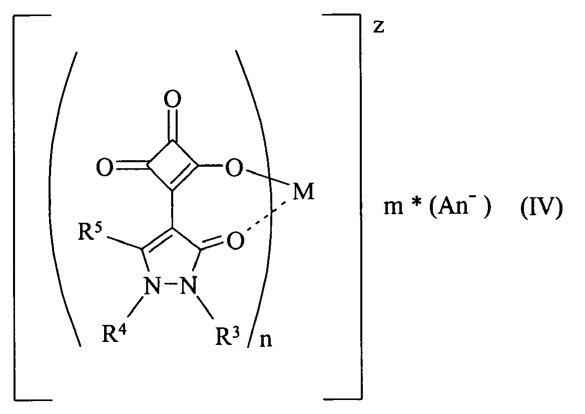 wherein
z represents a charge equal to 0 and +1;
m represents a number equal to z;
An⁻ represents chloride;
M represents a metal ion selected from the group consisting of Al, Zr, Cr, Co, Ni, Cu, Zn;
n represents a whole number from 2 to 3;
R₃ represents phenyl or p-tolyl;
R₄ represents methyl or benzyl;
R₅ represents methyl or phenyl.

6. A composition according to one or more of claims 1 to 5, wherein the compounds of formula (II) or (III) are selected from the group consisting of compounds of formulae (V), (VI), (VII), (VIII), (IX), (X), (XI), (XII), (XIII), (XIV), (XV) and (XVI).

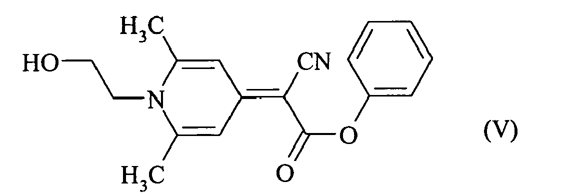

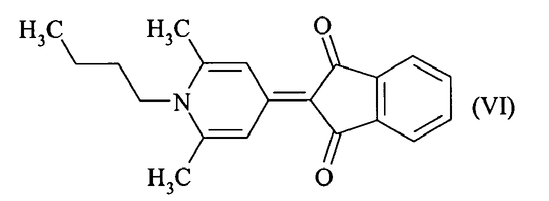

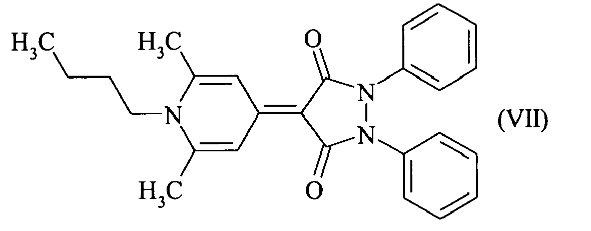

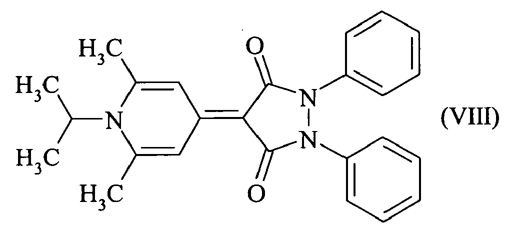

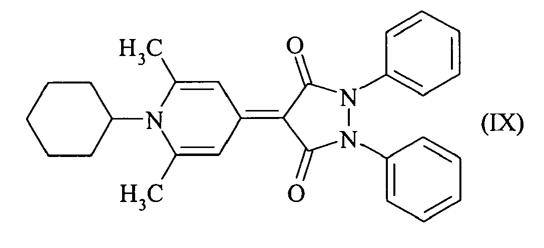

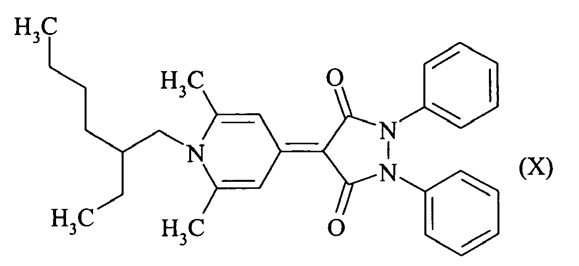

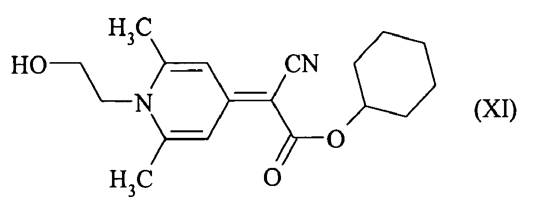

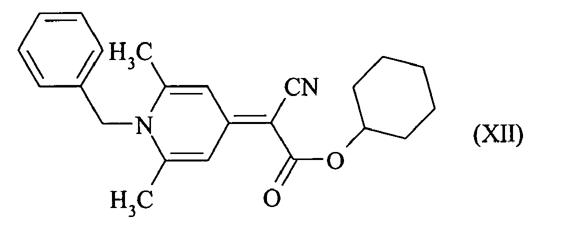

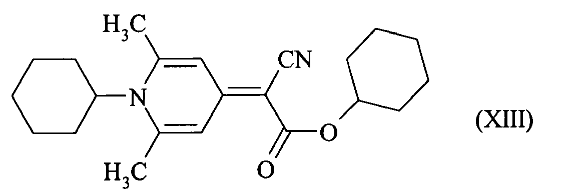

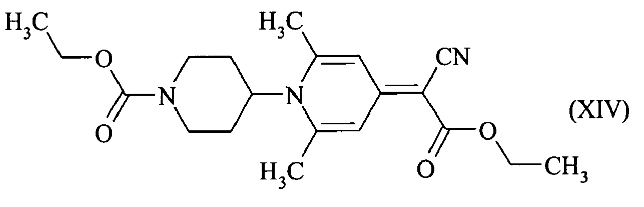

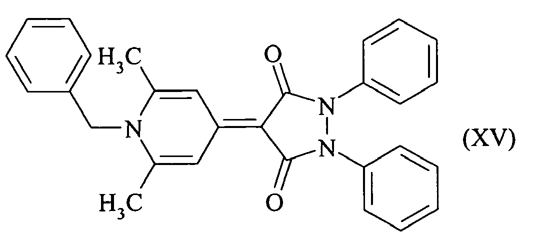

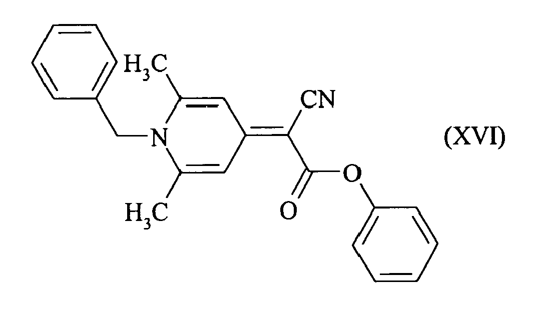

7. A composition according to one or more of claims 1 to 6, wherein the relative ratio of the combined weights of the compounds of formula (I) or (IV) to the combined weights of the compounds of formula (II) and/or (III) in the compositions is preferably of from between 0.01 and 0.99 to 0.99 and 0.01.

8. A composition according to one or more of claims 1 to 7, wherein the compositions comprise at least 10 % by weight, based on the total weight of the composition, of the combined amounts of the compounds of formula (I) and/or (IV) and (II) and/or (III).

9. A process for the preparation of compositions as defined in one or more of claims 1 to 8, by physically combining the individual compounds.

10. Use of compositions as defined in one or more of claims 1 to 8, in an optical layer.

11. Use of compositions as defined in one or more of claims 1 to 8, as a dye in an optical layer.

12. An optical layer comprising a composition as defined in one or more of claims 1 to 8.

13. A method for producing an optical layer as defined in claim 12, comprising the following steps
(a) providing a substrate,
(b) dissolving the compounds of formulae (I) or (IV) and (II) or (III) by
(b1) dissolving a composition comprising at least one compound of formula (I) or (IV) and at least one compound of formula (II) or (III) in an organic solvent to form a solution, or
(b2a) dissolving at least one compound of formula (I) or (IV) in an organic solvent to form a solution, and
(b2b) dissolving at least one compound of formula (II) (III) in an organic solvent to form a solution, or
(b3) dissolving at least one compound of formula (I) or (IV) together with at least one compound of formula (II) or (III) in an organic solvent to form a solution,
(c) coating the solution or the solutions on the substrate by
(c1) coating the solution (b1) or the solution (b3) on the substrate (a), or
(c2) coating the solution (b2a) on the substrate (a), evaporating the solvent, and coating the solution (b2b) on the substrate (a),
(d) evaporating the solvent to form an optical layer (also called dye layer or recording layer).

14. A method according to claim 13, wherein the substrate is polycarbonate (PC) or polymethylmethacrylate (PMMA).

15. A method according to claim 13 or 14, wherein the organic solvent is selected from C₁₋₈ alcohol, halogen substituted C₁₋₈ alcohols, C₁₋₈ ketone, C₁₋₈ ether, halogen substituted C₁₋₄ alkane, or amides.

16. An optical data recording medium comprising an optical layer as defined in claim 12.
